# EUROPEAN PATENT APPLICATION

(11) **EP 1 825 985 A2**
(43) Date of publication of application: **29.08.2007**
(21) Application number: 07103065.4
(22) Date of filing: 26.02.2007
(51) Int. Cl.: B29C 45/16

(54) **Process for making a stock for brooms and the stock for brooms**

(30) Priority: 28.02.2006 IT BO20060146
(71) Applicant: Tecmit S.r.L., 40012 Calderara Di Reno (Bologna) (IT)
(72) Inventor: Geminiani, Marco, 40127 Bologna (IT)
(74) Representative: Lanzoni, Luciano

(57) **Abstract**

A stock (1) for brooms made in a mould (23) having at least one base permanent mould (24, 25), a first cover (31) and a second cover (32).

## Description

The present invention relates to a broom component and a method for moulding a broom component.

In particular, the present invention relates to a stock for brooms and to a method for moulding a stock for brooms.

The function of stocks is to support the bristles which form the active element of the broom.

The bristles are usually attached to the stock, in holes made in the stock, by automated machines.

To be able to make the above-mentioned holes, the stock must have a minimum thickness, variable within predetermined values.

Stocks are commonly made by injection moulding expanded material, such as polypropylene.

The need to obtain a minimum thickness having a predetermined value involves lengthy moulding times substantially due to the time required for the material to cool.

A classic moulding cycle consists of injecting the material in the mould then cooling the mould, which is normally made of steel, using water.

A large part of the time necessary to carry out a moulding cycle is due to the time needed to cool the mould.

Moreover, if the broom has to be made in two different colours, there are prior art solutions in which the stock is made first, then a second part is made in the second colour required, which acts as a casing or covering for the stock, and finally the two components are manually assembled, consequently requiring manual labour, with the possibility of errors in connecting the two components.

The aim of the present invention is therefore to overcome the above-mentioned disadvantages by providing a stock and a process for making a stock which is rapid, economical and easy to apply.

This aim and others are substantially achieved by a process for making a stock comprising the features described in one or more of the claims herein.

The technical features of the present invention, in accordance with the above aim, are clear from the content of the claims herein, in particular claim 1 and, preferably, from any of the claims directly or indirectly dependent on claim 1.

The advantages of the present invention are more apparent in the detailed description which follows, with reference to the accompanying drawings which illustrate a preferred, non-limiting embodiment of the invention, in which:
- Figure 1 is a perspective top view of a preferred embodiment of a stock in accordance with the present invention;
- Figure 2 is a perspective view of a detail of the stock of Figure 1;
- Figure 3a is a perspective view of another detail of the stock;
- Figure 3b is a perspective view from a different angle of the detail of Figure 3a;
- Figure 4 is a perspective view from a different angle of the detail of Figure 2;
- Figure 5 is a perspective view from a different angle of the stock of Figure 1;
- Figures 6 to 13 illustrate the various steps of the process for moulding the stock in accordance with the invention.

With reference to the accompanying drawings, the numeral 1 denotes as a whole a stock for brooms.

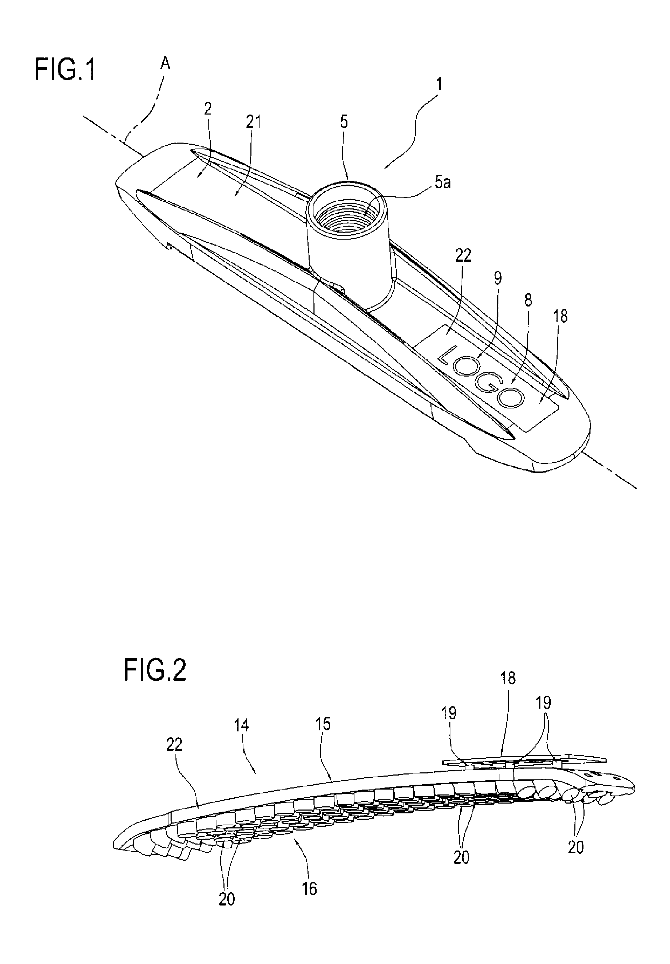

The stock 1 mainly extends along a predetermined longitudinal direction A, as shown in Figure 1.

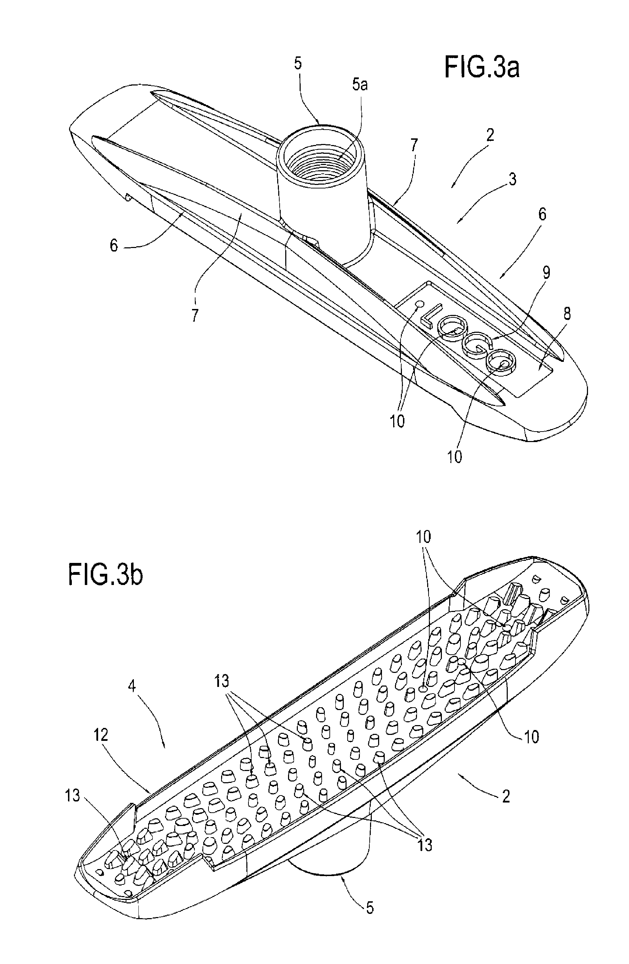

As illustrated in detail in Figures 3a and 3b, the stock 1 comprises a first portion 2 having an upper face 3 and a lower face 4.

The first portion 2 comprises a supporting element 5 for a broom handle, not illustrated, the supporting element emerging from the upper face 3.

The supporting element 5 has a substantially cylindrical shape and has a threaded inner cavity 5a with which the broom handle, not illustrated, connects by screwing in.

The upper face 3 also has respective longitudinal edges 6 extending parallel with the direction A.

On the longitudinal edges 6 there are respective stiffening ribs 7, the centre of the ribs being connected to the hollow cylindrical element 5, on diametrically opposed sides of the cylindrical element.

With reference to Figure 3a, the upper face 3 of the first portion 2 of the stock 1 has a rectangular cavity 8.

Inside the cavity 8 there is the raised text 9 of a logo, advantageously that of the broom manufacturer. Inside the cavity 8 there is also a plurality of holes 10 communicating with the lower face 4 of the first portion 2.

As illustrated in Figure 3b, the lower face 4 of the first portion 2 is delimited by respective edges 12 raised relative to the face 4.

A plurality of projecting elements 13 of various sizes are distributed on the lower face 4.

As illustrated in Figures 2, 4 and 5 the stock 1 also comprises a second portion 14 having a respective upper face 15 and lower face 16.

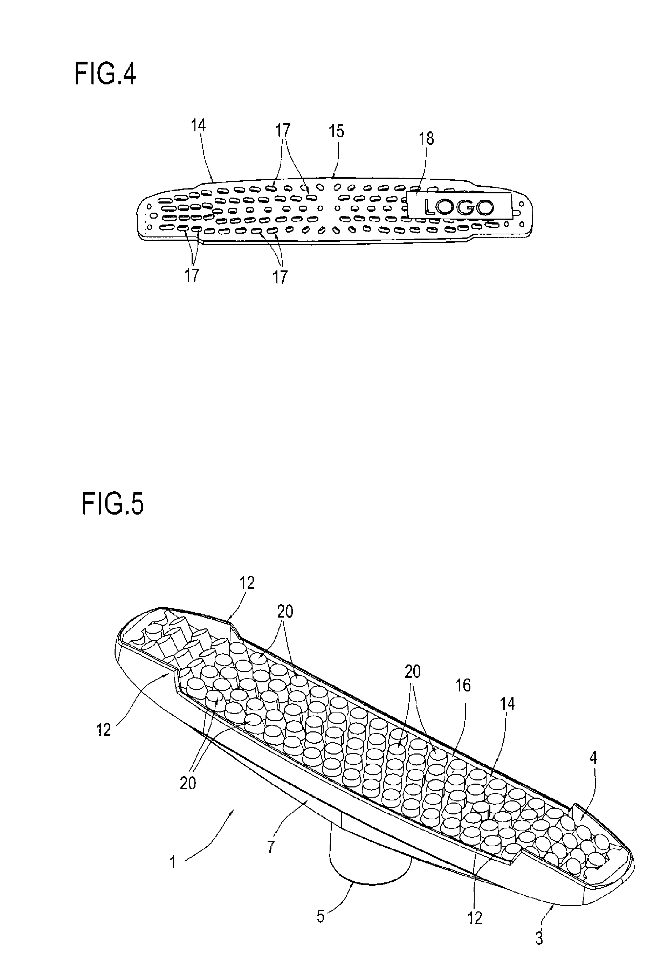

As illustrated in Figure 4, the upper face 15 has a plurality of cavities 17 of various sizes, designed to connect with the projecting elements 13 of the lower face 4 of the first portion 2.

In practice, the cavities 17 are shaped to match the respective projecting elements 13 of the lower face 4.

As shown in Figure 2 the upper face 15 also comprises a plate 18 supported and held away from the upper face 15 by a plurality of cylindrical supports 19.

With reference to Figure 1, the plate 18 fills the cavity 8 in the first portion 2 of the stock 1 and surrounds the text 9 of the manufacturer's logo.

As illustrated in Figures 2 and 5, on the lower face 16 of the second portion 14 there is a plurality of solid cylindrical elements 20 designed to receive active cleaning elements, such as bristles or the like.

The projecting elements 13 operate in conjunction with the cylindrical elements 20 to form a seat for housing the bristles.

The step, not illustrated, of applying the bristles involves making a hole in the elements 20 and at the same time removing part of the relative element 13.

The bristles are inserted in said hole, secured using suitable fixing elements of the known type.

In order for the holes to be made correctly, the stock 1 must have a predetermined minimum thickness. In the assembled configuration illustrated in Figure 5, the stock 1 has the upper face 15 of the second portion 14 connected to the lower face 4 of the first portion 2.

The two faces 4, 15 are connected during the stock 1 production process.

In practice, the two portions can be distinguished from one another because they are made of different materials but they are obtained with a single production process during which the two materials are welded together.

Advantageously, the first portion 2 of the stock 1 is made of unexpanded plastic material 21 and the second portion 14 is made of expanded plastic material 22.

The expanded plastic material 22 is preferably a different colour to that of the unexpanded plastic material 21.

When the plate 18 fills the cavity 8, the colour difference highlights the text 9 of the manufacturer's logo.

The invention relates to a process for making a stock as described above.

In particular, the process for making the stock is a process for injection moulding two materials, also known as an overmoulding process.

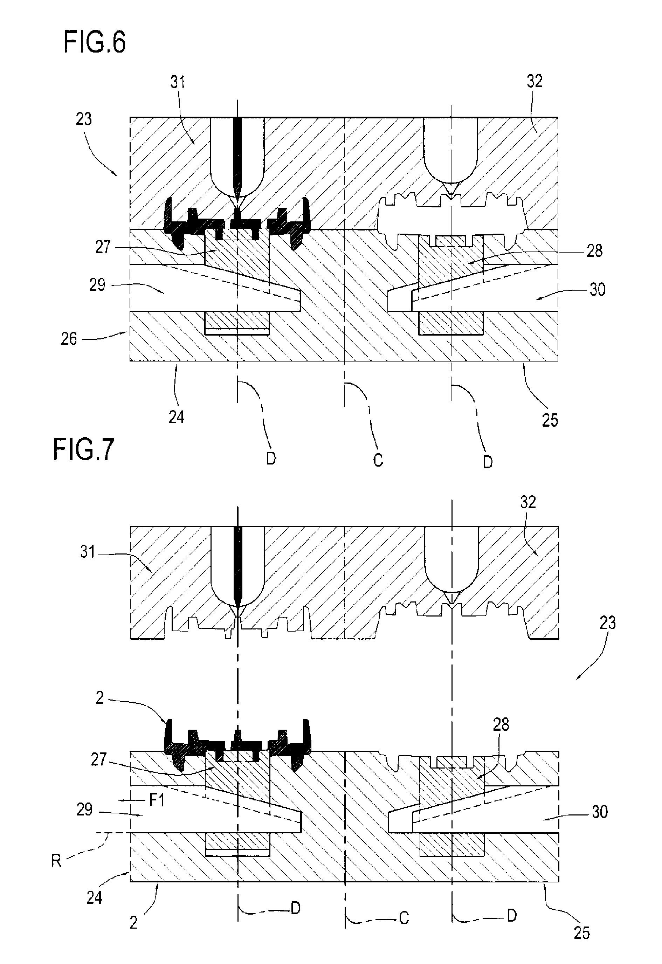

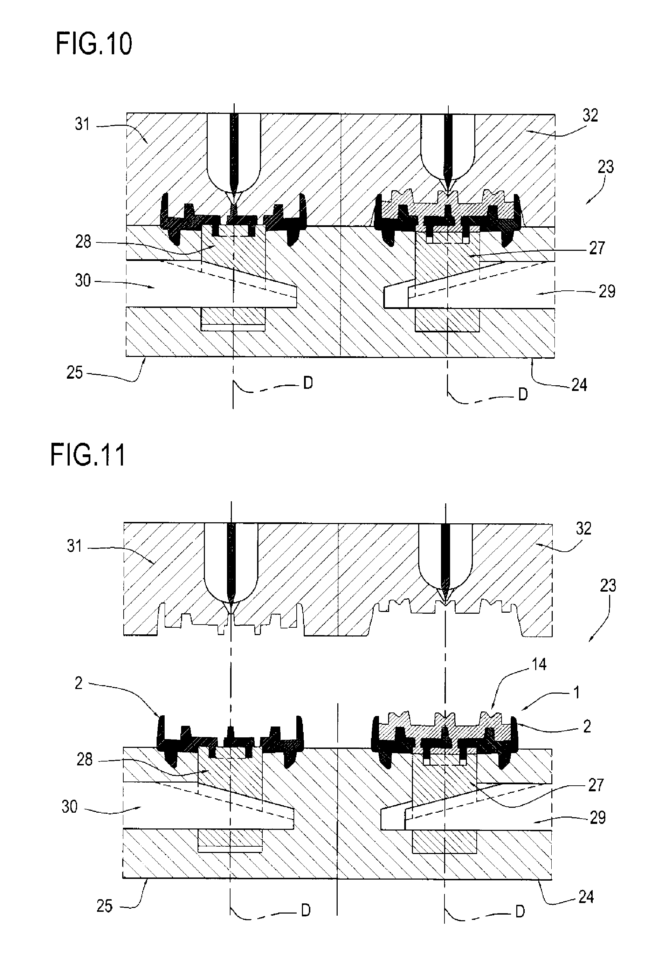

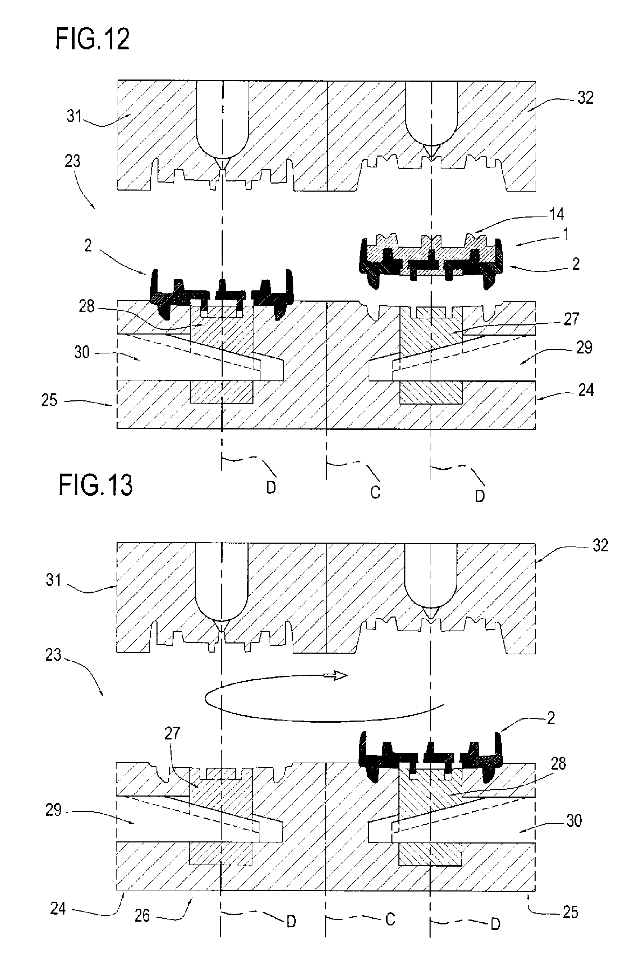

The process for making the stock 1 takes place in a mould 23 as illustrated in Figures 6 to 13.

The mould 23 comprises a first base permanent mould 24 and a second base permanent mould 25 identical to the first and positioned alongside it, together forming a movable part 26 of the mould 23.

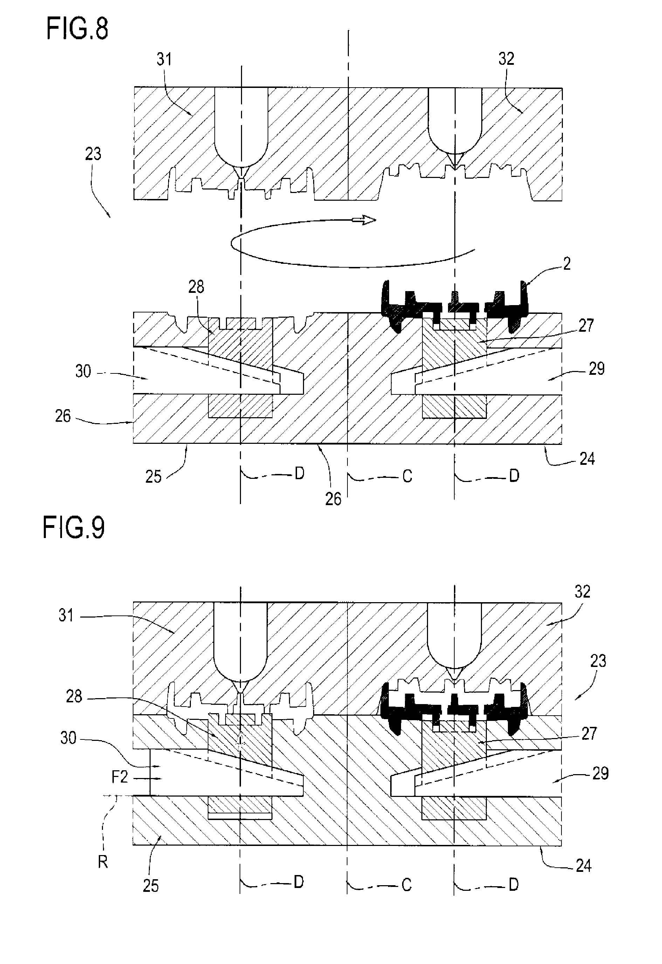

The movable part 26 can rotate about an axis of rotation C illustrated in Figure 8.

The two permanent moulds 24, 25 comprise, inside them, respective blocks 27, 28, both designed to produce the text 9 of the manufacturer's logo. The blocks 27, 28 can move along a respective axis D parallel with the axis of rotation C as illustrated in Figure 7.

Each permanent mould 24, 25 also comprises respective wedge-shaped slides 29, 30, movable along a direction R, indicated in Figure 7, transversal to the direction of movement of the blocks.

The movement of the slides 29, 30 along the direction R causes the blocks 27, 28 to move along the axis D. In particular, each block 27, 28 can move between a first position in which it projects beyond the surface of the relative base permanent mould 24, 25, and a second position in which it is lowered relative to said surface.

The mould 23 also comprises a first cover 31 and a second cover 32 positioned alongside one another and separate, which together form a fixed part 100 of the mould 23.

As shown in Figure 8, the first cover 31 has a profile designed for forming the first portion 2 of the stock 1, whilst the second cover 32 is for making the second portion 14 of the stock 1.

When the movable part 26 of the mould 23 rotates, each of the two base permanent moulds 24, 25 changes position with the other, so that they are alternatively positioned below the first cover 31 or the second cover 32.

With reference to Figure 6, when the mould 23 is closed, the first, unexpanded plastic material 21 is injected into the first base permanent mould 24 positioned under the first cover 31 and connected to it, to form the first portion 2 of the stock 1.

During the step just described, the block 27 relative to the first permanent mould 24 is in its first position, that is to say, projecting beyond the surface of the first base permanent mould 24, to allow production of the raised text 9.

When that step is complete, a cooling cycle using water begins, carried out with substantially known methods, not described in any further detail, at the end of which the mould 23 is opened. Advantageously, the mould 23 cooling and opening operations can be carried out simultaneously.

As illustrated in Figure 7, mould 23 opening coincides with a movement of the slide 29 in direction R as shown by the arrow F1 in Figure 7. This movement causes the block 27 of the first permanent mould 24 to move from its first, projecting position to its second, lowered position. Block 27 lowering creates the cavity 8 which will be filled by the second, expanded plastic material 22.

With reference to Figure 7, once the mould 23 has been opened, the movable part 26 is rotated through 180°, to bring the first base permanent mould 24, in which the first portion 2 of the stock 1 is located, under the second cover 32, to form the second portion 14 of the stock 1.

The second base permanent mould 25 is consequently moved so that it is under the first cover 31 to form the first portion 2 of a new stock 1.

The mould 23 is then closed and takes on the configuration illustrated in Figure 9. Mould 23 closing corresponds with a movement of the slide 30 of the second base permanent mould 25 along the direction R as shown by the arrow F2 in Figure 9, so that the relative block 28 is moved to its first position, projecting beyond the surface of the second permanent mould 25.

Basically, the blocks 27, 28 are moved along the movement axis D exclusively when the respective permanent mould 24, 25 is positioned below the first cover 31.

Once the mould 23 is closed, the second, expanded plastic material 22 is injected into the first base permanent mould 24 positioned below the second cover 32 and connected to it.

Simultaneously, the first, unexpanded plastic material 21 is injected into the second base permanent mould 25 positioned below the first cover 31 and connected to it. This operation starts the formation of a new stock 1.

At the end of the step just described, a second cooling cycle beings, after which the mould 23 is opened, the stock 1 contained in the first base permanent mould 24 is removed, and the movable part 26 of the mould 23 is rotated through 180° until the second permanent mould 25 is under the second cover 32.

Once the mould 23 has been opened and the stock 1 removed, the process is repeated cyclically as described above, allowing two moulding processes to be carried out simultaneously, a first in which the finished stock 1 is formed and a second in which the first portion 2 of a new stock 1 is moulded.

The process just described may also be carried out using exclusively the expanded plastic material 22, with a reduction in the surface finish of the stock 1 and an evident reduction in costs.

Alternatively, the process for making the stock 1 may also use exclusively the unexpanded plastic material 21, with an increase in the surface finish, but an associated increase in costs, due to the higher value of the unexpanded plastic material 21 compared with the expanded plastic material 22.

According to another alternative embodiment, not illustrated, in place of the projecting cylindrical elements 20, the lower face 16 of the second portion 14 comprises an element substantially having the shape of a parallelepiped, having a length and width substantially equal to the length and width of the second portion 14 of the stock 1 and a predetermined thickness. Said parallelepiped element has the same function as the cylindrical elements 20 and is basically equivalent to having the cylindrical elements 20 with the gaps between each of them filled with material.

The invention brings important advantages.

Firstly, the production process for moulding two materials allows a stock to be obtained which consists of two separate parts which are securely connected to one another.

The advantage of having two separate parts lies above all in the times necessary for the moulding cycle.

The duration of a normal moulding cycle usually depends mostly on the time necessary for the cooling cycle.

The time needed for a material to cool is subject to parabolic reduction with a reduction in the thickness of the material. Consequently, making the stock in two separate parts, each having a thickness equal to half the thickness of the stock significantly reduces the cooling times compared with production of the same stock in a single part. This reduction is at least 30%.

The use of two identical base permanent moulds allows an increase in the number of stocks made in the unit of time, because, while the moulding of one stock in one permanent mould is finished, moulding of a new stock is simultaneously started in the other permanent mould.

The invention described has evident industrial applications and may be modified and adapted in several ways without thereby departing from the scope of the inventive concept. Moreover, all details of the invention may be substituted by technically equivalent elements.

## Claims

1. A process for making a stock for brooms, involving the use of a mould (23) having at least one base permanent mould (24, 25), a first cover (31) and a second cover (32), **characterised in that** it comprises the steps of:
- injecting a first plastic material into the mould (23) consisting of at least one base permanent mould (24, 25) and of the first cover (31) to make a first portion (2) of the stock (1) having an upper face (3), an element (5) for connection to a handle, a lower face (4), a plurality of projecting elements (13) on the lower face (4) of the first portion (2);
- cooling the first portion (2), keeping it in the mould (23);
- substituting the first cover (31) with the second cover (32);
- injecting a second plastic material into the mould (23) to form a second portion (14) of the stock (1) having an upper face (15) formed by a plurality of cavities (17) of various sizes designed to connect with the projecting elements (13) of the lower face (4) of the first portion (2), and also having a lower face (16).

2. The process according to claim 1, **characterised in that** at least one of the steps for injecting one of the first and second materials is carried out using an unexpanded plastic material (21).

3. The process according to claim 1, **characterised in that** at least one of the steps for injecting one of the first or second materials is carried out using an expanded plastic material (22).

4. The process according to any of the claims from 1 to 3, **characterised in that** the step of moulding the first portion (2) comprises the step of making a cavity (8) in the upper face (3) of the first portion (2).

5. The process according to claim 4, **characterised in that** the step of making the first portion (2) comprises the step of producing raised text (9) in the cavity (8).

6. The process according to claim 5 or 6,
**characterised in that** the step of making the second portion (14) comprises the step of injecting a portion of the second material into the cavity (8) surrounding the text (9).

7. The process according to any of the claims from 1 to 6, **characterised in that** the step of injecting a second plastic material into the mould (23) to form the second portion (14) of the stock comprises the additional step of forming a plurality of cylindrical elements (20) emerging from the lower face (16), said cylindrical elements (20) being designed to receive active cleaning elements.

8. A stock for brooms, in particular made using the process according to any of the claims from 1 to 7, **characterised in that** the stock (1) comprises a first portion (2) and a second portion (14) stably connected to one another, the second portion comprising a lower face (16) with a plurality of cylindrical elements (20) emerging from it and designed to receive active cleaning elements.

9. The stock according to claim 8, **characterised in that** the first portion (2) comprises a lower face (4) having a plurality of projecting elements (13) for connecting the first portion (2) to the second portion (14) of the stock (1).

10. The stock according to claim 9, **characterised in that** the second portion (14) comprises an upper face (15) having a plurality of cavities (17) shaped to match the projecting elements (13) of the first portion (2).

11. The stock according to any of the claims from 8 to 10, **characterised in that** each of the first portion (2) and second portions (14) has a respective thickness substantially equal to half the total thickness of the stock.

12. The stock according to claim 8, **characterised in that** the lower face (16) comprises, in place of the plurality of cylindrical elements (20) emerging from it, an element substantially having the shape of a parallelepiped, with a predetermined thickness and designed to receive active cleaning elements.

13. A broom, **characterised in that** it comprises a stock made according to the process in any of the claims from 1 to 7.

14. A broom, **characterised in that** it comprises a stock according to any of the claims from 8 to 12.
